# FASCICULE DE BREVET EUROPEEN

(11) **EP 3 444 690 B1**
(45) Date de publication et mention de la délivrance du brevet: **09.04.2025**
(21) Numéro de dépôt: 18189428.8
(22) Date de dépôt: 16.08.2018
(51) Int. Cl.: H04W 4/021, B25B 21/00, H04W 4/02, B25B 23/14

(54) **SYSTÈME DE CONTRÔLE D'UN OUTIL PORTABLE À SOURCE D'ÉNERGIE AUTONOME, OUTIL PORTABLE, MODULE ET PROCÉDÉ DE CONTRÔLE CORRESPONDANTS**
KONTROLLSYSTEM EINES TRAGBAREN WERKZEUGS MIT AUTONOMER ENERGIEQUELLE, TRAGBARES WERKZEUG, ENTSPRECHENDES MODUL UND KONTROLLVERFAHREN
SYSTEM FOR CONTROLLING A PORTABLE TOOL WITH AUTONOMOUS POWER SOURCE, PORTABLE TOOL, CORRESPONDING MODULE AND CONTROL METHOD

(30) Priorité: 17.08.2017 FR 1757725
(43) Date de publication de la demande: 20.02.2019
(73) Titulaire: ETABLISSEMENTS GEORGES RENAULT, 44800 Saint Herblain (FR)
(72) Inventeur: PINEAU, Laurent, 44100 Nantes (FR); FRANCOIS, Ghislain, 44600 Saint Nazaire (FR); BUTSTRAEN, Gatien, 44000 Nantes (FR)
(74) Mandataire: Vidon Brevets & Stratégie

(56) Documents cités:
- WO-A1-2013/063507
- FR-A1- 3 010 927
- US-A1- 2017 160 030
- US-B1- 6 845 279
- US-B1- 7 055 233

## Description

### 1 DOMAINE TECHNIQUE

Le domaine de l'invention est celui des outils portables à source d'énergie autonome, par exemple des outils de vissage utilisés sur une chaine de fabrication.

Plus précisément, l'invention concerne le contrôle du fonctionnement d'un tel outil en fonction d'informations de contrôle et de règles de production prédéterminées.

L'invention a de nombreuses applications, notamment, mais non exclusivement, dans le domaine de la production automobile où la configuration des outils est spécifique à un poste de travail donné sur une chaine de production. Un système permettant de contrôler de tels outils portables, par exemple à fin qu'ils ne puissent être utilisés sur un mauvais poste de travail est ainsi de premier intérêt.

### 2 ARRIERE-PLAN TECHNOLOGIQUE

Le contexte de l'invention est celui de l'utilisation d'outils industriels, notamment autonomes (c'est-à-dire alimentés par batterie), tel qu'un outil de vissage dans le cadre de la production industrielle.

Par exemple, l'industrie automobile ou aéronautique utilise des outils de vissage perfectionnés, par exemple capables d'assurer des cycles de vissage intégrant de multiples étapes faisant varier des paramètres de vissage tels que :
- la vitesse de rotation (différente pendant une phase de pré-vissage ou de vissage) ;
- la stratégie de serrage : détermination du couple, angle, limite élastique suivant l'application.
- le séquençage d'opération de vissage, par exemple, le fait d'asservir le compte rendu d'une opération de vissage à la réalisation correcte de plusieurs vissages correspondants à plusieurs points d'assemblages sur une même pièce.

Par ailleurs, de tels cycles de vissage peuvent être différents suivant les pièces à traiter et/ou la zone de travail. Il est donc souhaitable de contrôler les outils, en particulier selon l'espace dans lequel il se trouve.

De plus le fonctionnement de tels outils est asservi aux ordres d'un système de contrôle de chaine de production. Un tel système peut être un automate industriel, cet automate peut gérer :
- L'avancement de la ligne ;
- L'activation ou la désactivation des différents outils de production en fonction des produits ou véhicule arrivant sur chaque poste de travail ;
- L'enregistrement de l'historique de production dont les résultats de vissage pour chaque produit ou véhicule passant à un poste de travail.

Historiquement, les outils de vissage utilisés dans la production industrielle sont reliés à un contrôleur fixe par un câble. Ce contrôleur intègre les moyens d'alimentation électrique de l'outil ainsi que les moyens de contrôle de cet outil. Ces moyens de contrôle permettent d'activer ou désactiver le fonctionnement de l'outil suivant une stratégie de vissage adaptée au poste de travail ou encore de récupérer des résultats de l'opération de vissage.

Ce contrôleur reçoit lui-même ses consignes de fonctionnement de la part du système de contrôle de production auquel il est relié par des moyens filaires. De la sorte, l'outil étant relié par un câble au contrôleur, il était garanti qu'un outil donné était utilisé au bon poste de travail (Ici, par poste de travail, on entend un espace de travail autorisé pour l'outil en question).

Cependant, l'usage des outils à source d'énergie autonome (par exemple à batterie(s)) s'est répandu dans le milieu de la production industrielle, de par le confort et l'ergonomie procurés.

Les fonctionnalités des outils, par exemple des visseuses, à batterie(s) sont cependant restées les mêmes. Ainsi ces visseuses restent reliées par lien radio à un contrôleur externe fixe ou un point de communication avec le système de contrôle de production.

Ce lien radio peut être par exemple un lien WiFi. Dans ce cas, le contrôleur n'intègre plus l'alimentation de puissance de l'outil, mais il intègre les moyens de contrôle de cet outil et les moyens de communication. Le contrôleur fixe reste relié par des moyens filaires au système de contrôle de production.

Ces nouveaux outils à source d'énergie autonome présentent cependant un inconvénient majeur : l'absence de câble n'empêche plus un opérateur de déplacer un outil sur un poste de travail autre que celui pour lequel il a été prévu et réglé.

Les conséquences négatives sont notamment les suivantes, par exemple pour une visseuse destinée à une action spécifique sur un véhicule spécifique :
- La stratégie de vissage peut être inadaptée à un usage fait sur un autre véhicule que celui présent sur le poste de travail ; et
- Les résultats de serrage qui vont être exportés après un serrage fait hors poste de travail seront associés au véhicule qui était présent sur le poste de travail, donc à un véhicule qui n'est pas celui ayant supporté l'opération de serrage.

Ces conséquences sont inacceptables dans le cadre de la production automobile et ceci a conduit à un développement en parallèle de moyens de localisation appliqués à de tels outils en milieu industriel.

Des inconvénients similaires sont rencontrés avec d'autres types d'outils autonomes, par exemple de perçage, et/ou dans d'autres applications industrielles.

Différentes technologies de localisation de l'outil ont été testées avec comme objectif d'asservir le fonctionnement de cet outil à sa présence dans une zone géographique correspondant à celle du poste de travail.

On peut citer les technologies suivantes :
- localisation par émetteur récepteur ultra-sons ;
- localisation par émetteur récepteur infra rouge ; et
- localisation par moyens radio, en particulier de type ULB (pour « Ultra Large Bande »).

Les moyens radios de type ULB sont actuellement considérés comme les plus adaptés à un environnement industriel. Ces moyens s'appuient sur une technique de modulation radio basée sur la transmission d'impulsions de très courte durée. La brièveté de ces impulsions minimise les erreurs de mesure d'un temps de propagation entre émetteur et récepteur et rend ces moyens radios particulièrement adaptés à la mesure de distance. Les fréquences utilisées se situent dans une bande de 3 à 10 GHz. Leur utilisation implique l'installation de balises fixes sur le périmètre du poste de travail. Ces balises intègrent un émetteur récepteur ULB apte à communiquer avec un tag embarqué sur l'outil, intégrant lui-même un émetteur récepteur ULB.

Sur la base des temps de vol mis par les signaux ULB pour circuler entre balises et tag, les moyens de contrôle associés aux balises sont capables de calculer la distance entre chaque balise et le tag, puis par trilatération de calculer les coordonnées de localisation du tag dans un repère lié aux balises et donc au poste de travail. Il est ainsi possible de savoir en temps réel où se situe l'outil, de vérifier sa présence dans la zone de travail et d'autoriser ou pas son fonctionnement suivant qu'il se trouve dans la zone de travail ou pas.

Différentes stratégies de mesure sont possibles pour fiabiliser la détermination du temps de vol en fonction de contraintes matérielles ou d'installation, ces stratégies portent les appellations suivantes : TOA (pour « Time Of Arrival » en anglais), TDOA (pour « Time Difference Of Arrival » en anglais) et TWR (pour « Time-Weighted Return » en anglais), et sont connues par l'homme de l'art.

La zone de travail est définie dans les moyens de contrôle par exemple par des coordonnées de points caractéristiques correspondant par exemple à des angles ou à des coins de la zone de travail, les limites de cette zone étant formées par des lignes joignant ces points caractéristiques. Le brevet FR3010927 décrit par exemple un procédé permettant de faciliter l'établissement de la zone de travail en plaçant l'outil à l'emplacement de ces points caractéristiques et en déclenchant la mesure et l'enregistrement des coordonnées des points caractéristiques en utilisant les moyens de commande de l'outil après avoir activé un mode apprentissage au niveau du contrôleur.

Les systèmes de localisation existants présentent toutefois certains inconvénients.

Par exemple, le calcul de la localisation de l'outil est réalisé au niveau de l'une des balises, appelée balise « maître », et l'information de la position de l'outil est communiquée au contrôleur qui autorise ou non l'outil à fonctionner.

Cette approche prévoyant une détermination de la position et l'envoi de commandes par un contrôleur autorisant ou non le fonctionnement de l'outil est par exemple proposée dans les documents FR3010927A1 ou US7055233B1.

Or, dans certaines applications, il n'existe pas de contrôleur fixe mais un simple point d'accès WiFi permettant la communication radio entre l'outil et le système de contrôle de production.

Dans d'autres cas, le poste de travail est simplifié et l'outil fonctionne de façon autonome sans contrôleur. Malgré cette autonomie, il peut exister un besoin pour contrôler la position de l'outil.

Dans ces circonstances, il n'est pas possible de relier la balise « maître » à un dispositif pouvant contrôler l'outil ce qui constitue un handicap pour ce type de système de localisation.

La nécessité de relier la balise « maître » à un contrôleur peut constituer un inconvénient dans la mesure où la balise n'est pas au même endroit que le contrôleur ce qui impose un câblage parfois compliqué à mettre en œuvre.

Les documents de brevet US68452279B1, US2017/160030A1 et WO2013/063507A1 illustrent différentes techniques de contrôle connues de l'art antérieur.

Il existe ainsi un besoin pour un système permettant un contrôle simplifié et efficace d'un outil portable à source d'énergie autonome, ne présentant pas au moins certains de ces inconvénients de l'état de l'art.

### 3 RESUME

Selon l'invention, il est proposé un système de contrôle d'un outil portable tel que défini dans les revendications 1 à 9.

Dans un tel système, l'outil portable comprend des moyens de réception d'informations de contrôle délivrées par l'au moins une balise, des moyens de détermination par lui-même de sa position dans ou en dehors d'un espace prédéterminé et des moyens de contrôle aptes à piloter le comportement de l'outil en fonction des informations de contrôle et d'au moins une règle de production prédéterminée.

Un tel système permet notamment le contrôle par lui-même, et non via un serveur ou un contrôleur lui envoyant des commandes, d'un outil portable à source d'énergie autonome. En effet, c'est l'outil lui-même qui pilote son comportement, en fonction des informations de contrôle reçues, et non un serveur distant, qui transmettrait des instructions ou ordres de fonctionnement. Les informations de contrôle comprennent des informations de géolocalisation. Plus particulièrement, l'outil reçoit des signaux de la part d'une ou plusieurs balises, qui peuvent porter, selon les modes de réalisation, des données de localisation de l'outil ou des informations permettant à l'outil de déterminer cette position. Ainsi, des informations de géolocalisation (par exemple des informations brutes issues des signaux physiques utilisés par la balise de géolocalisation pour localiser l'outil) peuvent être transmises à l'outil afin que ce dernier détermine par lui-même sa position (par exemple des coordonnées de position, une distance à la balise de géolocalisation) sur la base de laquelle son comportement sera déduit.

Plus particulièrement, les informations de géolocalisation comprennent des données représentatives de la localisation de l'outil. Ainsi, les données représentatives de la localisation de l'outil (par exemple des coordonnées de position, un angle et/ou une distance à la balise de géolocalisation) sont déterminées par la balise de géolocalisation. Cette dernière transmet alors les données en question à l'outil, minimisant par là-même la charge de calcul dans l'outil. L'outil est alors apte à déterminer par lui-même s'il se trouve dans un espace autorisé, par exemple dans un bon espace de travail. De plus, l'outil n'est autorisé à fonctionner que lorsqu'il se trouve dans un espace de travail prédéterminé. Plusieurs espaces peuvent être définis, le cas échéant avec des fonctionnements associés distincts.

Selon un aspect particulier du système, les moyens de réception d'informations de contrôle communiquent avec les moyens de contrôle dans l'outil portable selon une des techniques appartenant au groupe comprenant :
- les liaisons SPI ;
- les liaisons I2C ;
- les liaisons USB ;
- les liaisons série asynchrone ;
- les entrées/sorties numériques ;
- les moyens radios.

Selon un aspect particulier du système, les données représentatives de la localisation de l'outil appartiennent au groupe comprenant :
- au moins une distance entre l'outil portable et au moins une balise ;
- des coordonnées de l'outil portable dans un repère fixe, obtenue par un calcul de trilatération à partir de distances entre l'outil portable et au moins deux balises. Deux balises peuvent suffire à réaliser un calcul de localisation approché dans le cas où l'outil est utilisé par l'opérateur à une hauteur variant peu ;
- des coordonnées polaires de l'outil portable par rapport au repère fixe d'une balise ;
- des coordonnées polaires d'au moins deux balises par rapport au repère de l'outil.

Selon un aspect particulier du système, les frontières de l'au moins un espace prédéterminé sont définies par les données représentatives des frontières appartenant au groupe comprenant :
- des coordonnées de points prédéterminées correspondant aux angles des frontières ;
- des jonctions théoriques droites ou courbes passant par les angles ;
- au moins une distance limite prédéterminée par rapport à au moins une balise prédéterminée.

Les points prédéterminés correspondent plus généralement à des points caractéristiques des frontières, les points caractéristiques en question étant par exemple les angles précités ou des coins des frontières. De même, dans certains modes de réalisation, les jonctions théoriques droites ou courbes passent par les points caractéristiques en question. L'outil portable intègre une mémoire dans laquelle sont enregistrées des données définissant les frontières. Ainsi, l'outil peut vérifier en permanence ou périodiquement, et de manière autonome la conformité de sa position avec la zone autorisée correspondant aux données enregistrées dans la mémoire.

Selon un aspect particulier du système, au moins certains des signaux échangés entre au moins une des balises et les moyens de réception de l'outil portable portent :
- des données complémentaires ; et/ou
- des ordres d'activation d'une stratégie de fonctionnement prédéterminée et/ou de désactivation de l'outil et/ou d'un de ses accessoires.

Ainsi, l'utilisation de la capacité du canal de transmission radio entre la ou les balises du système de contrôle et l'outil est optimisée.

Selon l'invention, il est proposé un procédé de contrôle tel que défini dans les revendications 10 à 13.

Le procédé comprend une étape de détermination de la présence de l'outil portable dans ou en dehors de l'au moins un espace prédéterminé à partir des informations de contrôle. Ainsi, l'outil n'est autorisé à fonctionner que lorsqu'il se trouve au bon poste de travail.

Les informations de contrôle comprennent des informations de géolocalisation, et l'étape de détermination comprend :
- une étape de calcul ou d'obtention des données représentatives de la localisation de l'outil à partir des informations de géolocalisation reçues par les moyens de réception ;
- une étape d'identification de la position de l'outil dans ou en dehors des frontières de l'au moins un espace prédéterminé, en fonction des données représentatives de la localisation de l'outil.

Ainsi, l'outil détermine lui-même s'il se trouve dans une zone autorisée, i.e. au bon poste de travail.

Selon un aspect particulier, le procédé met en œuvre, dans l'outil, dans un mode d'apprentissage, une étape de définition de l'au moins un espace de travail prédéterminé. Ainsi, l'espace prédéterminé représentant le poste de travail dans lequel l'outil va être autorisé à fonctionner est défini directement par l'opérateur via la mise en œuvre d'un mode d'apprentissage au niveau de l'outil.

Selon un aspect particulier du procédé, l'étape de définition met en œuvre un stockage de données représentatives de frontières de l'au moins un espace de travail prédéterminé et/ou d'une distance limite par rapport à une balise prédéterminée, par activation d'un actionneur d'apprentissage. Ainsi, l'outil peut vérifier en permanence et de manière autonome la conformité de sa position avec la zone autorisée correspondant aux données stockées dans la mémoire.

Selon un aspect particulier, le procédé comprend une étape de réception de données complémentaires dans l'outil et/ou une étape de transmission de données complémentaires de l'outil vers un serveur, via des signaux échangés avec les balises. Ainsi, l'utilisation de la capacité du canal de transmission radio entre la ou les balises du système de contrôle et l'outil est optimisée.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1a et 1b illustrent des exemples de système de contrôle d'un outil portable à source d'énergie autonome selon différents modes de réalisation de l'invention ;
- la figure 2 présente un exemple simplifié de structure d'un module monté sur l'outil portable de la figure 3 ;
- la figure 3 illustre des étapes d'un procédé de contrôle de l'outil portable à source d'énergie autonome de la figure 1 selon un mode de réalisation de l'invention.

### 5 DESCRIPTION DETAILLEE DE L'INVENTION

Sur toutes les figures du présent document, les éléments et étapes identiques sont désignés par une même référence.

Le principe général de la technique décrite repose sur un contrôle d'un outil portable à source d'énergie autonome réalisé par ce dernier.

Un tel système met notamment en œuvre au moins une balise de géolocalisation extérieure à l'outil, apte à communiquer avec l'outil en question. Plus particulièrement, l'outil portable comprend des moyens de réception d'informations de contrôle délivrées par une ou plusieurs balises et des moyens de contrôle aptes à piloter le comportement de l'outil en fonction des informations de contrôle et d'au moins une règle de production prédéterminée.

Ainsi, la transmission directe, par la balise de géolocalisation, des informations de contrôle à l'outil et leur utilisation par les moyens de commande de l'outil permet de s'affranchir de l'utilisation d'un contrôleur externe pour transmettre des instructions à l'outil, comme dans les techniques connues.

Comme décrit dans l'exemple ci-dessous, l'invention permet notamment à l'outil de contrôler lui-même son fonctionnement en fonction de sa position, qu'il peut selon les modes de réalisation déterminer lui-même ou recevoir de l'une des balises.

Par ailleurs, on notera que des outils portables à source d'énergie autonome ne communiquant pas avec un contrôleur externe ou un système de contrôle de chaine de production peuvent également être contrôlés sur la base des informations fournies directement par la balise de géolocalisation.

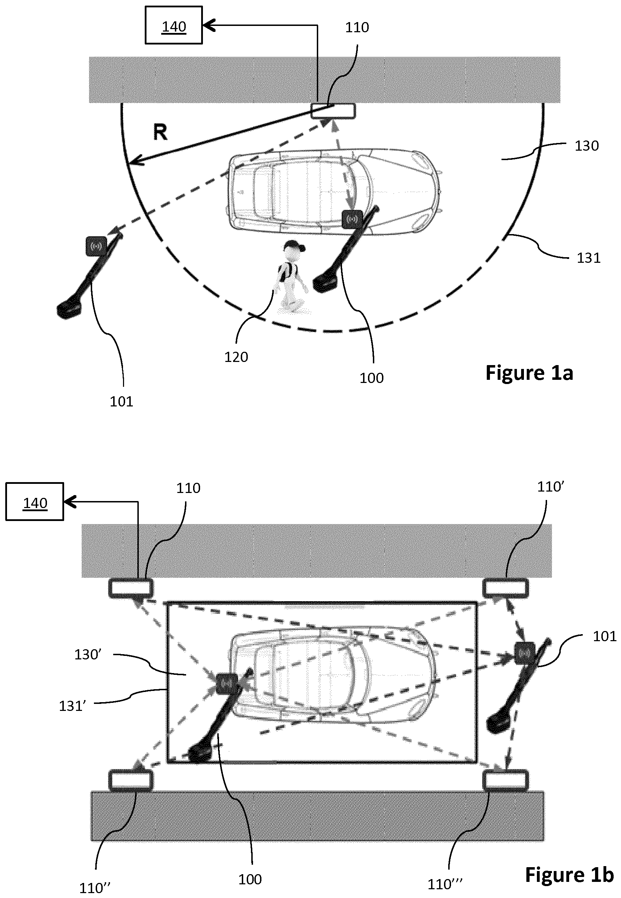

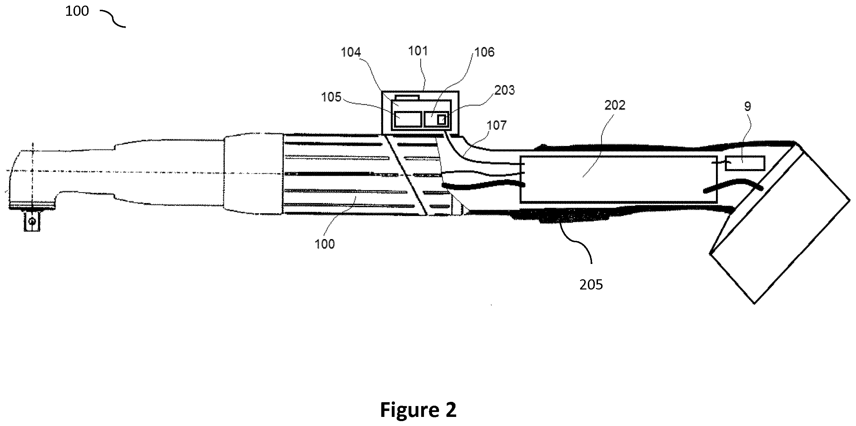

On décrit maintenant, en relation avec les **figures 1a, 1b** **et** **2****,** des exemples de système de contrôle d'un outil 100 portable à source d'énergie autonome ainsi qu'un module 101 monté sur l'outil 100 portable en question selon différents modes de réalisation de l'invention.

L'invention peut s'appliquer à de nombreux types d'outils portables à source d'énergie autonome, notamment aux visseuses, aux perceuses, ...

Par la suite, on décrit plus particulièrement l'exemple d'une visseuse électrique 100 à serrage asservi qui est classiquement mise en œuvre pour assurer, au cours d'une opération de vissage, le serrage d'un assemblage, c'est-à-dire la liaison de plusieurs pièces par exemple au moyen d'une ou plusieurs vis serrées à un couple dont la valeur est choisie de façon que l'assemblage soit suffisamment rigide mais avec un couple maximal pour ne pas endommager ladite vis. De ce fait, le couple de serrage cible est un exemple de paramètres d'utilisation de l'outil 100. D'autres paramètres d'utilisation peuvent être définis tels que l'angle de vissage ou le passage de la phase élastique d'une vis à la phase plastique.

Un tel outil 100 comprend généralement un carter comprenant une poignée et contenant notamment les éléments suivants :
- un moteur synchrone muni d'un rotor ;
- une transmission intégrant une réduction ;
- un organe terminal susceptible de porter un embout de vissage ;
- un capteur de couple destiné à détecter l'atteinte d'un couple objectif ;
- un capteur d'angle destiné à mesurer l'angle entre le rotor et le stator du moteur ;
- un moyen de commande de l'outil permettant à un opérateur d'utiliser cet outil, ce moyen de commande est typiquement une gâchette électrique ;
- au moins une batterie constituant la source d'énergie électrique ; et
- un module émetteur récepteur 9 permettant la communication radio (réseau Wifi par exemple) de façon bidirectionnelle avec son contrôleur 10 pour recevoir notamment les paramètres d'utilisation.

Par ailleurs, un tel outil 100 comprend également :
- des moyens de contrôle 202 commandant en continu le moteur et recevant des capteurs des informations sur l'opération en cours ; et
- des moyens de réception et éventuellement d'émission 104 permettant la communication radio (ici en mettant en œuvre un lien radio ULB sur une bande de fréquence comprise entre 3 et 10 GHz) avec au moins une balise 110, 110', 110", 110'" de géolocalisation extérieure à l'outil 100 pour recevoir notamment des informations de contrôle permettant de définir un comportement de l'outil en tenant compte d'au moins une règle de production prédéterminée.

Ainsi, dans le mode de réalisation illustré, le système utilise des signaux radiofréquences du type ULB. La position de l'outil est alors déterminée via une évaluation de la distance entre l'outil et l'au moins une balise 110, 110', 110", 110"'du système. Certaines balises ULB permettent également de déterminer sous quel angle l'outil est perçu par la balise par rapport à son propre référentiel.

Plus particulièrement, les moyens de réception 104 communiquent ici avec les moyens de contrôle 202 via une liaison SPI 107 (pour « Serial Peripheral Interface » en anglais). Les moyens de réception 104 sont reliés aux moyens de contrôle de l'outil 202 par des conducteurs filaires ou circuit imprimé, ces conducteurs permettent l'échange de signaux et l'alimentation électrique du module.

Dans le cas de l'installation d'un module sur un outil qui ne comporte pas d'origine des conducteurs pour relier le module aux moyens de contrôle de l'outil, le module peut intégrer un élément de communication radio apte à communiquer avec les moyens de communication radios que l'outil utilise pour communiquer avec le contrôleur (Wifi, Bluetooth, etc).

Dans des variantes, d'autres interfaces sont utilisées pour l'échange de données entre les moyens de réception 104 et les moyens de contrôle 202, par exemple une liaison I2C (pour « Inter-Integrated Circuit » en anglais), une liaison USB (pour « Universal Serial Bus » en anglais), une liaison série asynchrone, ou plus généralement des entrées/sorties numériques.

Dans certaines variantes de la signalisation utilisée entre l'au moins une balise 110, 110', 110", 110"' de géolocalisation et l'outil 100, les informations de contrôle comprennent des informations de géolocalisation (par exemple des informations brutes, du type temps de vol ou autre, issues des signaux ULB utilisés par la balise de géolocalisation pour localiser l'outil). De la sorte, l'outil 100 est apte à déterminer par lui-même sa position sur la base des informations de géolocalisation fournies, et donc d'en déduire un comportement en fonction de la position déterminée.

Dans ce cas, les moyens de réception peuvent intégrer des moyens de calcul de données représentatives de la localisation 105 de l'outil à partir des informations brutes.

Dans d'autres variantes de signalisation, les informations de géolocalisation comprennent directement les données représentatives de la localisation de l'outil 100 lui-même. De la sorte, la charge de calcul est minimisée dans l'outil 100.

Dans le mode de réalisation illustré sur la figure 1a (une seule balise 110), de telles données représentatives de la localisation de l'outil 100 sont par exemple :
- au moins une distance entre l'outil 100 portable et la balise 110 ; et
- des coordonnées polaires dudit outil portable par rapport au repère fixe d'une balise 110 (par exemple lorsque la balise 110 en question comprend au moins deux antennes configurées pour permettre une séparation de source et donc la détermination d'un angle).

Par ailleurs, dans le mode de réalisation représenté sur la figure 1b dans lesquels le système de contrôle comprend quatre balises 110, 110', 110", 110"' les données représentatives de la localisation de l'outil 100 peuvent également être :
- des coordonnées de l'outil 100 portable dans un repère fixe, obtenue par un calcul de trilatération à partir de distances entre l'outil 100 portable et au moins deux balises parmi les quatre balises 110, 110', 110", 110‴ ;
- des coordonnées polaires d'au moins deux balises parmi les quatre balises 110, 110', 110", 110"' par rapport au repère de l'outil 100 ; et
- des données représentatives de distances entre au moins deux balises parmi les quatre balises 110, 110', 110", 110"' et l'outil 100.

Quel que soit le mode de réalisation considéré (figure 1a ou 1b) et quelle que soit la variante de signalisation précitée considérée, les règles de production prédéterminées utilisées par l'outil 100 peuvent ainsi tenir compte de la localisation de l'outil. Une telle règle est par exemple :
- autoriser le fonctionnement de l'outil 100 portable et/ou de l'un de ses accessoires, si l'outil 100 se trouve dans un espace prédéterminé 130, 130' (représentatif du poste de travail autorisé pour l'outil 100) ;
- empêcher le fonctionnement d'un outil 101 et/ou de l'un de ses accessoires, si l'outil 101 en question ne se trouve pas dans l'espace prédéterminé 130, 130' en question ;
- autoriser un fonctionnement particulier de l'outil 100 portable et/ou de l'un de ses accessoires, suivant une stratégie de fonctionnement prédéterminée, si l'outil se trouve dans l'espace prédéterminé 130, 130'.

Ainsi, l'outil 100 n'est autorisé à fonctionner, de manière particulière ou non, que lorsqu'il se trouve dans une zone autorisée, c'est-à-dire à un bon poste de travail en pratique.

Cette zone autorisée, ou espace prédéterminé, peut notamment être définie en deux dimensions (surface au sol), et représenter tout ou portion d'un cercle de rayon R (figure 1a), une ellipse, un rectangle (figure 1b), une combinaison de ces surfaces, ou plus généralement toute forme adaptée, définie par des frontières rectilignes, courbes ou quelconques. L'espace peut également être défini en trois dimensions.

Pour ce faire, l'outil 100 portable comprend des moyens de détermination 106 de la présence de l'outil 100 portable dans ou en dehors de l'espace prédéterminé 130 comprenant :
- des moyens de calcul ou d'obtention 105 (suivant la variante de signalisation précitée considérée) des données représentatives de la localisation de l'outil 100 à partir des informations de géolocalisation reçues par les moyens de réception 104 ;
- des moyens d'identification 106 de la position de l'outil 100 dans ou en dehors des frontières 131 de l'espace prédéterminé 130, en fonction des données représentatives de la localisation de l'outil 100.

Ainsi, l'outil est apte à déterminer s'il se trouve dans une zone autorisée, c'est-à-dire dans l'espace prédéterminé 130 représentatif du bon poste de travail.

Dans certains cas, plusieurs espaces prédéterminés peuvent être définis, le cas échéant avec des comportements autorisés pour l'outil différents selon l'espace. Par exemple, l'outil peut être utilisé dans deux zones d'une chaine de production, et le fonctionnement (couple et/ou séquence de vissage par exemple) peut être adapté selon la zone considérée, et donc l'opération devant être effectuée par l'outil.

Plus particulièrement, suivant la géométrie de l'espace prédéterminé 130, 130', ses frontières 131, 131' peuvent être définies par des données représentatives appartenant au groupe comprenant :
- des coordonnées de point prédéterminées correspondant aux angles des frontières 131, 131' ;
- des jonctions théoriques droites ou courbes passant par les angles en question ;
- au moins une distance limite prédéterminée par rapport à au moins une balise 110 (ou 110' ou 110" ou 110‴).

Dans d'autres modes de réalisation, les points prédéterminées correspondent plus généralement à des points caractéristiques des frontières 131, 131' les points caractéristiques en question étant par exemple les angles précités ou des coins des frontières 131, 131'. De même, dans certains modes de réalisation, les jonctions théoriques droites ou courbes passent par les points caractéristiques en question.

Par ailleurs, les moyens d'identification 106 de la position de l'outil 100 intègrent une mémoire 203 dans laquelle sont enregistrées des données définissant les frontières 131 en question.

De la sorte, l'outil 100 peut vérifier en permanence, ou périodiquement, et de manière autonome la conformité de sa position dans l'espace prédéterminé 130 (c'est-à-dire la zone autorisée) correspondant aux données enregistrées dans la mémoire.

Afin de définir l'espace prédéterminé 130, 130' et de stocker les données définissant les frontières 131, 131' correspondantes, l'outil 100 portable peut être utilisé, selon l'exemple illustré, selon au moins deux modes :
- un mode d'apprentissage dans lequel on définit l'espace prédéterminé 130, 130' via des moyens de définition 106 ;
- un mode de travail, dans lequel les moyens de contrôle 202 contrôlent l'outil 100 en fonction de sa géolocalisation par rapport à l'espace prédéterminé 130, 130'.

Pour ce faire, les moyens de définition 202 comprennent un actionneur d'apprentissage 205 (qui peut être la gâchette d'activation de l'outil dans le mode de travail ou un bouton dans le cas d'un module monté sur un outil pour lequel il n'aurait pas été prévu l'usage de la gâchette dans un mode d'apprentissage) permettant d'indiquer la présence de l'outil 100 dans un angle de l'espace prédéterminé 130, 130' et/ou à une distance d'un balise donnée 110 (ou 110' ou 110" ou 110‴). Dans d'autres modes de réalisation, l'actionneur d'apprentissage 205 permet d'indiquer la présence de l'outil 100 à proximité d'un point caractéristique des frontières 131, 131' de l'au moins un espace prédéterminé 130, 130', un tel point caractéristique étant par exemple l'angle précité ou un coin des frontières 131, 131'.

De la sorte, l'opérateur 120 peut, dans le mode d'apprentissage, se déplacer le long de la frontière 131, 131' de l'espace prédéterminé 130, 130' qu'il veut définir tout en actionnant l'actionneur d'apprentissage 205. Ainsi, les données représentatives de la position à laquelle se trouve l'outil 100 au moment où l'actionneur d'apprentissage 205 est actionné, permettent de définir les frontières 131, 131' de l'espace prédéterminé 130, 130' et de les stocker dans la mémoire 203.

En variante, l'espace prédéterminé 130, 130' peut être configuré en externe, et être transmis et être enregistré dans la mémoire 203 de l'outil.

Par ailleurs, dans d'autres variantes de signalisation entre la balise 110 (ou 110' ou 110" ou 110"') de géolocalisation et l'outil 100, au moins certains des signaux échangés entre la balise 110 (ou 110' ou 110" ou 110"') de géolocalisation et les moyens de réception 104 de l'outil 100 portable portent :
- des données complémentaires ; et/ou
- des ordres d'activation d'une stratégie de fonctionnement prédéterminée et/ou de désactivation de l'outil 100 et/ou d'un de ses accessoires ; et/ou
- des stratégies de fonctionnement.

Ainsi, l'utilisation de la capacité du canal de transmission radio entre la ou les balises du système de contrôle et l'outil est optimisée.

Lorsqu'il s'agit de données transmises par la balise 110 (ou 110' ou 110" ou 110‴) de géolocalisation (alimentée par un serveur 140 ou système de contrôle de production) à l'outil 100, de telles données complémentaires définissent par exemple l'activation d'une stratégie de production ou de vissage ou la désactivation de la visseuse.

De même, lorsqu'il s'agit de données transmises par l'outil à la balise 110 de géolocalisation (puis au serveur 140), de telles données complémentaires peuvent être par exemple des données de traçabilité (l'outil 100 indique qu'il a correctement vissé l'ensemble des vis prévues sur le moteur), un identifiant de l'opérateur 120, un identifiant de l'accessoire utilisé,...

Ces modes de fonctionnement peuvent être utilisés, par exemple, si l'au moins une balise, celle jouant le rôle de balise « maître », est connectée au système de contrôle de production et remplace ainsi un contrôleur externe fixe ou un point de communication avec le système de contrôle de production.

Dans le mode de réalisation illustré sur la figure 2, des moyens de réception et éventuellement émission 104 intégrant des moyens de calcul ou d'obtention 105 (suivant la variante de signalisation précitée considérée) des données représentatives de la localisation de l'outil ; des moyens d'identification 106 de la position de l'outil associés à une mémoire 203 (par exemple une mémoire RAM) sont embarqués dans un module 101 destiné à être monté sur l'outil 100 portable.

Cet aspect modulaire permet par exemple de mettre à niveau un outil non initialement prévu pour supporter la technique de contrôle selon l'invention, ou de transférer le module 101 sur un autre outil, en cas de panne.

Dans d'autres modes de réalisation non illustrés, les moyens en question ainsi que la mémoire 203 sont directement implémentés dans l'outil 100.

Par ailleurs, les moyens en question (moyens de calcul ou d'obtention 105 des données représentatives de la localisation de l'outil, moyens d'identification 106 de la présence de l'outil 100 portable dans ou en dehors de l'espace prédéterminé 130) sont implantés par exemple sous la forme d'une unité de traitement équipée par exemple d'un processeur, et pilotée par un programme d'ordinateur stocké dans une mémoire morte (par exemple une mémoire ROM ou un disque dur). A l'initialisation, les instructions de code du programme d'ordinateur sont par exemple chargées dans la mémoire 203 avant d'être exécutées par le processeur de l'unité de traitement.

Plus particulièrement, les moyens en question peuvent être réalisés indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où les moyens en question sont réalisés avec une machine de calcul reprogrammable, le programme correspondant (c'est-à-dire la séquence d'instructions) pourra être stocké dans un médium de stockage amovible (tel que par exemple une mémoire flash, une clé USB, une disquette, un CD-ROM ou un DVD-ROM) ou non, ce médium de stockage étant lisible partiellement ou totalement par un ordinateur ou un processeur.

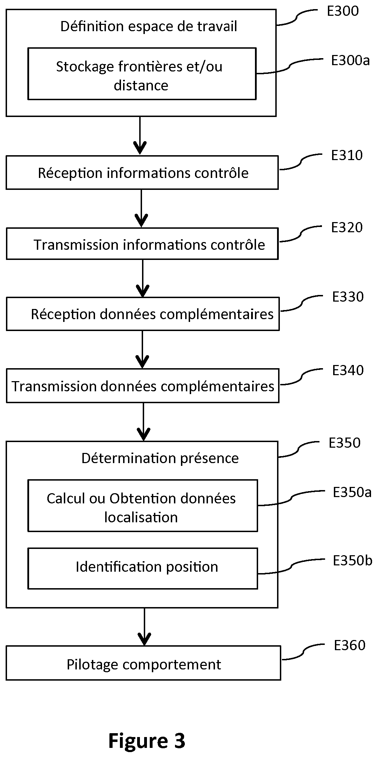

On décrit maintenant, en relation avec la **figure 3****,** les étapes d'un procédé de contrôle de l'outil 100 portable à source d'énergie autonome des figures 1a, 1b et 2 selon un mode de réalisation de l'invention.

Tout d'abord, dans un mode d'apprentissage, l'outil 100 met en œuvre une étape de définition E300 de l'espace de travail prédéterminé 130, 130', par exemple par l'opérateur 120 via la mise en œuvre d'un mode d'apprentissage au niveau de l'outil 100 comme décrit ci-dessus en relation avec les figures 1a et 1b.

Plus particulièrement, l'étape de définition E300 met en œuvre un stockage E300a de données représentatives des frontières 131, 131' de l'espace de travail prédéterminé et/ou d'une distance limite par rapport à la balise 110, par activation de l'actionneur d'apprentissage 205. Ces données représentatives peuvent correspondre à un ensemble de points définis par l'actionneur 205, ou, préférentiellement, des résultats d'un calcul de frontières (par exemple sous la forme de points caractéristiques, par exemple des angles ou des coins des frontières, et de portions de droite ou de courbe reliant deux points caractéristiques).

De la sorte, l'outil peut vérifier à tout moment et de manière autonome la conformité de sa position avec la zone autorisée correspondant aux données stockées dans la mémoire 203.

Lors d'une étape de réception E310, les moyens de réception 104 de l'outil 100 reçoivent des informations de contrôle délivrées directement par la balise 110 (ou 110' ou 110" ou 110"').

Lors d'une étape de transmission E320, les moyens de réception 104 de l'outil 100 transmettent les informations de contrôle aux moyens de contrôle 202 via la liaison SPI 107. Les moyens de contrôle 202 sont ainsi aptes à piloter le comportement de l'outil 100 en fonction des informations de contrôle et d'au moins une règle de production prédéterminée comme décrit ci-dessus en relation avec les figures 1a et 1b.

Les informations reçues peuvent notamment être des données brutes de retour des balises 110, 110', 110", 110"', à partir desquelles les moyens de contrôle 202 déterminent une position, la compare aux frontières 131, 131' pour déterminer la présence de l'outil dans ou hors de l'espace prédéterminé 130, 130', et pilote l'outil en conséquence, en autorisant son fonctionnement ou non, et le cas échéant en sélectionnant un mode de fonctionnement spécifique. Dans une variante, la position est déterminée par une des balises 110 (ou 110' ou 110" ou 110"') (en compilant les données fournies par plusieurs balises le cas échéant) et reçue directement par les moyens de réception 104.

Par ailleurs, lors d'une étape E330 de réception de données complémentaires, l'outil 100 reçoit de la balise 110 (ou 110' ou 110" ou 110‴) par exemple des informations générales (par exemple un type de véhicule à traiter, correspondant à un mode de fonctionnement particulier...).

De même, lors d'une étape d'émission E340 de données complémentaires, l'outil 100 transmet à la balise 110 (ou 110' ou 110" ou 110‴) par exemple un identifiant de l'opérateur 120 et/ou des données de traçabilité.

Lors d'une étape de détermination E350, l'outil 100 détermine ainsi s'il est dans ou en dehors de l'espace prédéterminé 130, 130'.

Pour ce faire, les informations de contrôle comprennent des informations de géolocalisation (qui sont soit des informations brutes issues des signaux ULB utilisés par la balise de géolocalisation pour localiser l'outil, soit directement les données représentatives de la localisation de l'outil 100 suivant la variante de signalisation discutée ci-dessus en relation avec les figures 1a et 1b qui est considérée). L'outil 100 effectue ainsi :
- une étape de calcul ou d'obtention E350a (suivant la variante de signalisation considérée) de données représentatives de la localisation de l'outil à partir des informations de géolocalisation reçues par les moyens de réception 104 ; et
- une étape d'identification de la position E350b de l'outil dans ou en dehors des frontières 131, 131' de l'espace prédéterminé 130, 130', en fonction des données représentatives de la localisation de l'outil 100.

Lors d'une étape de pilotage E360, les moyens de contrôle 202 pilotent le comportement de l'outil 100 en fonction des informations de contrôle et d'au moins une règle de production prédéterminée telle que décrite ci-dessus en relation avec les figures 1a et 1b.

## Revendications

1. Système de contrôle d'un outil industriel (100) portable à source d'énergie autonome du type visseuse ou perceuse, sur une chaine de production comprenant au moins un espace prédéterminé correspondant à un poste, ou une zone de travail, ledit système de contrôle comprenant ledit outil et au moins une balise (110) de géolocalisation fixe apte à communiquer avec ledit outil via un moyen sans-fil, **caractérisé en ce que** ledit système met en œuvre un module (101) destiné à être monté dans ou sur ledit outil, ledit module comprenant :
- une mémoire (203) apte à stocker au moins des données représentatives de frontières prédéterminées (131, 131') caractérisant plusieurs espaces prédéterminés (130, 130') ;
- des moyens de réception et d'émission (104) d'informations de contrôle délivrées ou reçues par ladite au moins une balise (110), mettant en œuvre des communications Ultra Large Bande radio sur une bande de fréquence comprise entre 35 et 10 GHz, les informations de contrôle comprenant, en réception, de ladite au moins une balise vers ledit outil, des informations de géolocalisation et des informations permettant de définir l'activation d'une stratégie de production ou de vissage, et, en émission, de l'outil vers ladite au moins une balise, de données complémentaires telles que des données de traçabilité, un identifiant d'un opérateur et/ou un identifiant d'un accessoire utilisé ;
- des moyens de calcul ou d'obtention (105) de données représentatives de la localisation dudit outil à partir des informations de géolocalisation reçues ;
- des moyens d'identification (106) de la position dudit outil dans ou en dehors d'un desdits espaces prédéterminés, en fonction desdites données représentatives de la localisation dudit outil et desdites données représentatives des frontières prédéterminées ;
et **en ce que** ledit outil coopère avec ledit module et comprend en outre :
- des moyens de contrôle (202) aptes à piloter le comportement dudit outil lui-même en fonction de la position identifiée dudit outil -dans ou en dehors desdits espaces prédéterminés, pour autoriser le fonctionnement de l'outil portable et/ou de l'un de ses accessoires, si l'outil se trouve dans au moins un espace prédéterminé et empêcher le fonctionnement de l'outil et/ou de l'un de ses accessoires, si l'outil ne se trouve pas dans au moins un espace prédéterminé, et autorisant des fonctionnements distincts selon lesdits espaces prédéterminés, correspondant chacun à au moins une règle de production prédéterminée autorisant un fonctionnement particulier de l'outil et/ou de l'un de ses accessoires suivant une stratégie de fonctionnement prédéterminée associée à l'espace prédéterminé concerné, la stratégie de fonctionnement comprenant le couple et/ou la stratégie de vissage, en tenant compte des informations reçues par lesdits moyens de réception et d'émission (104).

2. Système selon la revendication 1, **caractérisé en ce qu'**il comprend un actionneur d'apprentissage (205) permettant d'indiquer la présence dudit outil dans un angle et/ou à une frontière desdits espaces prédéterminés et/ou à une distance de référence d'au moins une desdites balises.

3. Système de contrôle selon la revendication 1, **caractérisé en ce que** lesdites informations de géolocalisation comprennent des données représentatives de la localisation de l'outil.

4. Système de contrôle selon la revendication 3, **caractérisé en ce que** lesdites données représentatives de la localisation dudit outil appartiennent au groupe comprenant :
- au moins une distance entre ledit outil portable et au moins une balise ;
- des coordonnées dudit outil portable dans un repère fixe, obtenue par un calcul de trilatération à partir de distances entre ledit outil portable et au moins deux balises ;
- des coordonnées polaires dudit outil portable par rapport au repère fixe d'une balise ;
- des coordonnées polaires d'au moins deux balises par rapport au repère dudit outil.

5. Système de contrôle l'une des revendications précédentes, **caractérisé en ce que** lesdites frontières desdits espaces prédéterminés sont définies par les données représentatives des frontières appartenant au groupe comprenant :
- des coordonnées de point prédéterminées correspondant aux angles desdites frontières ;
- des jonctions théoriques droites ou courbes passant par lesdits angles ;
- au moins une distance limite prédéterminée par rapport à au moins une balise prédéterminée.

6. Système de contrôle selon l'une quelconque des revendications précédentes, **caractérisé en ce qu'**au moins certains des signaux échangés entre au moins une desdites balises ledit module portent :
- des données complémentaires ; et/ou
- des ordres d'activation d'une stratégie de fonctionnement prédéterminée et/ou de désactivation dudit outil et/ou d'un de ses accessoires.

7. Système de contrôle selon l'une quelconque des revendications précédentes, **caractérisé en ce que** lesdits moyens de réception (104) d'informations de contrôle communiquent avec lesdits moyens de contrôle (202) selon une des techniques appartenant au groupe comprenant :
- les liaisons SPI ;
- les liaisons I2C ;
- les liaisons USB ;
- les liaisons série asynchrone ;
- les entrées/sorties numériques ;
- les moyens radios.

8. Système de contrôle selon l'une quelconque des revendications précédentes, **caractérisé en ce que** l'outil portable comprend des moyens de définition desdits espaces prédéterminés, dans un mode d'apprentissage.

9. Système de contrôle selon la revendication 8, **caractérisé en ce que** lesdits moyens de définition comprennent un actionneur d'apprentissage (205) permettant d'indiquer la présence dudit outil dans un angle desdits espaces prédéterminés et/ou à une distance d'au moins une balise.

10. Procédé de contrôle d'un outil portable (100) à source d'énergie autonome selon par un système de contrôle selon l'une des revendications 1 à 10, ledit outil portable étant muni de moyens de contrôle (202) aptes à piloter le comportement dudit outil, mettant en œuvre au moins une balise de géolocalisation (110, 110', 110", 110‴) fixe apte à communiquer avec ledit outil portable,
**caractérisé en ce qu'**il met en œuvre, dans ledit outil portable, les étapes suivantes :
- réception (E310) d'informations de contrôle délivrées par ladite au moins une balise, lesdites informations de contrôle comprenant des informations de géolocalisation et des informations permettant de définir l'activation d'une stratégie de production ou de vissage ;
- émission (E340) de données complémentaires telles que des données de traçabilité, un identifiant d'un opérateur et/ou un identifiant d'un accessoire utilisé ;
- détermination (E350) de la présence dudit outil portable dans ou en dehors dudit au moins un espace prédéterminé à partir desdites informations de contrôle ; comprenant :
- une étape de calcul ou d'obtention (E350a) desdites données représentatives de la localisation dudit outil à partir desdites informations de géolocalisation reçues par lesdits moyens de réception ;
- une étape d'identification de la position (E350b) dudit outil dans ou en dehors d'un desdits espaces prédéterminés, en fonction desdites données représentatives de la localisation dudit outil ;
- pilotage (E360) du comportement dudit outil en fonction de la présence dudit outil portable dans ou en dehors desdits espaces prédéterminés, pour autoriser le fonctionnement de l'outil portable et/ou de l'un de ses accessoires, si l'outil se trouve dans au moins un espace prédéterminé et empêcher le fonctionnement de l'outil et/ou de l'un de ses accessoires, si l'outil ne se trouve pas dans au moins un espace prédéterminé,
et autorisant des fonctionnements distincts selon lesdits espaces prédéterminés, correspondant chacun à au moins une règle de production prédéterminée autorisant un fonctionnement particulier de l'outil et/ou de l'un de ses accessoires suivant une stratégie de fonctionnement prédéterminée associée, ou un comportement autorisé, à l'espace prédéterminé concerné, la stratégie de fonctionnement comprenant le couple et/ou la stratégie de vissage, en tenant compte des informations reçues dans l'étape de réception.

11. Procédé de contrôle selon la revendication 10, **caractérisé en ce qu'**il met en œuvre, dans ledit outil, dans un mode d'apprentissage, une étape de définition (E300) desdits espaces de travail prédéterminés.

12. Procédé de contrôle selon la revendication 11, **caractérisé en ce que** ladite étape de définition met en œuvre un stockage (E300a) de données représentatives de frontières desdits espaces de travail prédéterminés et/ou d'une distance limite par rapport à une balise prédéterminée, par activation d'un actionneur d'apprentissage (205).

13. Procédé de contrôle selon l'une quelconque des revendications 10 à 12, **caractérisé en ce qu'**il comprend une étape de réception (E330) de données complémentaires dans ledit outil et/ou une étape de transmission (E340) de données complémentaires dudit outil vers un serveur (140), via des signaux échangés avec lesdites balises.

## Patentansprüche

1. Steuerungssystem für ein tragbares industrielles Werkzeug (100) mit autonomer Energiequelle vom Typ eines Schraubers oder einer Bohrmaschine in einer Fertigungsstraße, die mindestens einen vorbestimmten Raum umfasst, der einem Arbeitsplatz oder -bereich entspricht, wobei das Steuerungssystem das Werkzeug und mindestens eine ortsfeste Geolokalisierungsbake (110), die geeignet ist, mit dem Werkzeug über ein drahtloses Medium zu kommunizieren, umfasst, **dadurch gekennzeichnet, dass** das System ein Modul (101) einsetzt, das dazu bestimmt ist, in oder an dem Werkzeug montiert zu werden, wobei das Modul umfasst:
- einen Speicher (203), der geeignet ist, mindestens Daten zu speichern, die für vorbestimmte Grenzen (131, 131'), die mehrere vorbestimmte Räume (130, 130') kennzeichnen, repräsentativ sind;
- Empfangs- und Sendemittel (104) für Steuerungsinformationen, die von der mindestens einen Bake (110) ausgegeben oder empfangen werden, die Ultra-Weitband-Funkkommunikationen über ein Frequenzband zwischen 35 und 10 GHz einsetzt, wobei die Steuerungsinformationen, beim Empfangen, von der mindestens einen Bake zu dem Werkzeug, Geolokalisierungsinformationen und Informationen, die es ermöglichen, die Aktivierung einer Fertigungs- oder Schraubstrategie zu definieren, und beim Senden, von dem Werkzeug zu der mindestens einen Bake, ergänzende Daten wie Rückverfolgbarkeitsdaten, eine Kennung eines Arbeiters und/oder eine Kennung eines verwendeten Zubehörteils umfassen;
- Mittel zum Berechnen oder Erhalten (105) von Daten, die für den Standort des Werkzeugs repräsentativ sind, ausgehend von den empfangenen Geolokalisierungsdaten;
- Mittel zur Identifizierung (106) der Position des Werkzeugs innerhalb oder außerhalb eines der vorbestimmten Räume in Abhängigkeit von den für den Standort des Werkzeugs repräsentativen Daten und von den für die vorbestimmten Grenzen repräsentativen Daten;
und dadurch, dass das Werkzeug mit dem Modul zusammenwirkt und ferner umfasst:
- Steuerungsmittel (202), die geeignet sind, das Verhalten des Werkzeugs selbst in Abhängigkeit von der identifizierten Position des Werkzeugs innerhalb oder außerhalb der vorbestimmten Räume zu steuern, um den Betrieb des tragbaren Werkzeugs und/oder eines seiner Zubehörteile zuzulassen, wenn sich das Werkzeug in mindestens einem vorbestimmten Raum befindet, und den Betrieb des Werkzeugs und/oder eines seiner Zubehörteile zu verhindern, wenn sich das Werkzeug nicht in mindestens einem vorbestimmten Raum befindet, und verschiedene Betriebsweisen gemäß den vorbestimmten Räumen zuzulassen, die jeweils mindestens einer vorbestimmten Fertigungsregel entsprechen, die einen besonderen Betrieb des Werkzeugs und/oder eines seiner Zubehörteile gemäß einer dem betroffenen vorbestimmten Raum zugeordneten vorbestimmten Betriebsstrategie zulässt, wobei die Betriebsstrategie das Drehmoment und/oder die Schraubstrategie umfasst, unter Berücksichtigung der von den Empfangs- und Sendemitteln (104) empfangenen Informationen.

2. System nach Anspruch 1, **dadurch gekennzeichnet, dass** es einen Einlern-Aktor (205) umfasst, der es ermöglicht, das Vorhandensein des Werkzeugs in einer Ecke und/oder an einer Grenze der vorbestimmten Räume und/oder in einem Referenzabstand von mindestens einer der Baken anzugeben.

3. Steuerungssystem nach Anspruch 1, **dadurch gekennzeichnet, dass** die Geolokalisierungsinformationen Daten umfassen, die für den Standort des Werkzeugs repräsentativ sind.

4. Steuerungssystem nach Anspruch 3, **dadurch gekennzeichnet, dass** die Daten, die für den Standort des Werkzeugs repräsentativ sind, der Gruppe angehören, die umfasst:
- mindestens einen Abstand zwischen dem tragbaren Werkzeug und mindestens einer Bake;
- Koordinaten des tragbaren Werkzeugs in einem ortsfesten Koordinatensystem, erhalten durch eine Trilaterationsberechnung ausgehend von Abständen zwischen dem tragbaren Werkzeug und mindestens zwei Baken;
- Polarkoordinaten des tragbaren Werkzeugs in Bezug auf das ortsfeste Koordinatensystem einer Bake;
- Polarkoordinaten von mindestens zwei Baken in Bezug auf das Koordinatensystem des Werkzeugs.

5. Steuerungssystem nach einem der vorhergehenden Ansprüche, **dadurch gekennzeichnet, dass** die Grenzen der vorbestimmten Räume durch die für die Grenzen repräsentativen Daten definiert werden, die der Gruppe angehören, die umfasst:
- vorbestimmten Punktkoordinaten, die den Ecken der Grenzen entsprechen;
- gerade oder gekrümmte theoretische Verbindungen, die durch die Ecken verlaufen;
- mindestens einen vorbestimmten Grenzabstand in Bezug auf mindestens eine vorbestimmte Bake.

6. System zur Steuerung nach einem der vorhergehenden Ansprüche, **dadurch gekennzeichnet, dass** mindestens einige der Signale, die zwischen mindestens einer der Baken und dem Modul ausgetauscht werden, tragen:
- ergänzende Daten; und/oder
- Befehle zur Aktivierung einer vorbestimmten Betriebsstrategie und/oder zur Deaktivierung des Werkzeugs und/oder eines seiner Zubehörteile.

7. Steuerungssystem nach einem der vorhergehenden Ansprüche, **dadurch gekennzeichnet, dass** die Empfangsmittel (104) für Steuerungsinformationen mit den Steuerungsmitteln (202) gemäß einer der Techniken kommunizieren, die der Gruppe angehören, die umfasst:
- SPI-Verbindungen;
- I2C-Verbindungen;
- USB-Verbindungen;
- asynchrone serielle Verbindungen;
- digitale Eingänge/Ausgänge;
- Funkmittel.

8. Steuerungssystem nach einem der vorhergehenden Ansprüche, **dadurch gekennzeichnet, dass** das tragbare Werkzeug Mittel zur Definition der vorbestimmten Räume in einem Einlernmodus umfasst.

9. Steuerungssystem nach Anspruch 8, **dadurch gekennzeichnet, dass** die Mittel zur Definition einen Einlern-Aktor (205) umfassen, der es ermöglicht, das Vorhandensein des Werkzeugs in einer Ecke der vorbestimmten Räume und/oder in einem Abstand von mindestens einer Bake anzugeben.

10. Steuerungsverfahren zur Steuerung eines tragbaren Werkzeugs (100) mit autonomer Energiequelle durch ein Steuerungssystem nach einem der Ansprüche 1 bis 10, wobei das tragbare Werkzeug mit Steuerungsmitteln (202) versehen ist, die geeignet sind, das Verhalten des Werkzeug zu steuern, wobei mindestens eine ortsfeste Geolokalisierungsbake (110, 110', 110", 110"') eingesetzt wird, die geeignet ist, mit dem tragbaren Werkzeug zu kommunizieren,
**dadurch gekennzeichnet, dass** es, in dem tragbaren Werkzeug, die folgenden Schritte einsetzt:
- Empfangen (E310) von Steuerungsinformationen, die von der mindestens einen Bake ausgegeben werden, wobei die Steuerungsinformationen Geolokalisierungsinformationen und Informationen, die es ermöglichen, die Aktivierung einer Fertigungs- oder Schraubstrategie zu definieren, umfassen;
- Senden (E340) von ergänzenden Daten wie Rückverfolgbarkeitsdaten, eine Kennung eines Arbeiters und/oder eine Kennung eines verwendeten Zubehörteils;
- Bestimmen (E350) des Vorhandenseins des tragbaren Werkzeugs innerhalb oder außerhalb des mindestens einen vorbestimmten Raums ausgehend von den Steuerungsinformationen; umfassend:
- einen Schritt des Berechnens oder Erhaltens (E350a) der Daten, die für den Standort des Werkzeugs repräsentativ sind, ausgehend von den von den Empfangsmitteln empfangenen Geolokalisierungsdaten;
- einen Schritt des Identifizierens der Position (E350b) des Werkzeugs innerhalb oder außerhalb eines der vorbestimmten Räume in Abhängigkeit von den Daten, die für den Standort des Werkzeugs repräsentativ sind;
- Steuern (E360) des Verhaltens des Werkzeugs in Abhängigkeit von dem Vorhandensein des tragbaren Werkzeugs innerhalb oder außerhalb der vorbestimmten Räume, um den Betrieb des tragbaren Werkzeugs und/oder eines seiner Zubehörteile zuzulassen, wenn sich das Werkzeug in mindestens einem vorbestimmten Raum befindet, und den Betrieb des Werkzeugs und/oder eines seiner Zubehörteile zu verhindern, wenn sich das Werkzeug nicht in mindestens einem vorbestimmten Raum befindet, und wobei es verschiedene Betriebsweisen gemäß den vorbestimmten Räumen zulässt, die jeweils mindestens einer vorbestimmten Fertigungsregel entsprechen, die einen besonderen Betrieb des Werkzeugs und/oder eines seiner Zubehörteile gemäß einer zugeordneten vorbestimmten Betriebsstrategie oder ein zugelassenes Verhalten für den betreffenden vorbestimmten Raum zulässt, wobei die Betriebsstrategie das Drehmoment und/oder die Schraubstrategie umfasst, unter Berücksichtigung der in dem Empfangsschritt empfangenen Informationen.

11. Steuerungsverfahren nach Anspruch 10, **dadurch gekennzeichnet, dass** es in dem Werkzeug in einem Einlernmodus einen Schritt des Definierens (E300) der vorbestimmten Arbeitsräume einsetzt.

12. Steuerungsverfahren nach Anspruch 11, **dadurch gekennzeichnet, dass** der Schritt des Definierens ein Speichern (E300a) von Daten, die für Grenzen der vorbestimmten Arbeitsräume und/oder für einen Grenzabstand in Bezug auf eine vorbestimmte Bake repräsentativ sind, durch Aktivieren eines Einlern-Aktors (205) einsetzt.

13. Steuerungsverfahren nach einem der Ansprüche 10 bis 12, **dadurch gekennzeichnet, dass** es einen Schritt des Empfangens (E330) von ergänzenden Daten in dem Werkzeug und/oder einen Schritt des Übertragens (E340) von ergänzenden Daten des Werkzeugs zu einem Server (140) über mit den Baken ausgetauschte Signale umfasst.

## Claims

1. Control system for controlling a portable, drilling or screwing industrial tool (100) with a stand-alone power source, on a production line comprising at least one predetermined space corresponding to a station, or working area, said control system comprising said tool and at least one fixed geolocation beacon (110) capable of communicating with said tool via a wireless means,
**characterized in that** said system implements a module (101) intended to be mounted in or on said tool, said module comprising:
- a memory (203) capable of storing at least data representative of predetermined boundaries (131, 131') characterizing a plurality of predetermined spaces (130, 130');
- means (104) for receiving and sending control information delivered to or received by said at least one beacon (110), implementing ultra-wideband radio communication in a frequency band between 35 and 10 GHz, the control information comprising, receive-side, i.e. when sent from said at least one beacon to said tool, geolocation information and information making it possible to define activation of a production or screwing strategy, and, send-side, i.e. when sent from the tool to said at least one beacon, additional data such as traceability data, an identifier of an operator and/or an identifier of an employed accessory;
- means (105) for computing or obtaining data representative of the location of said tool from the received geolocation information;
- means (106) for identifying the position of said tool in or outside of one of said predetermined spaces, depending on said data representative of the location of said tool and on said data representative of the predetermined boundaries;
and **in that** said tool interacts with said module and further comprises:
- control means (202) capable of controlling the behaviour of said tool itself depending on the identified position of said tool in or outside of said predetermined spaces, to permit operation of the portable tool and/or of one of its accessories, if the tool is found in at least one predetermined space, and to prevent operation of the tool and/or of one of its accessories, if the tool is not found in at least one predetermined space, and permitting distinct types of operation according to said predetermined spaces, each type of operation corresponding to at least one predetermined production rule permitting a particular type of operation of the tool and/or of one of its accessories in compliance with a predetermined operating strategy associated with the predetermined space in question, the operating strategy comprising the screwing strategy and/or torque, taking into account the information received by said receiving and sending means (104).

2. System according to claim 1, **characterized in that** it comprises a learning actuator (205) making it possible to indicate the presence of said tool in a corner and/or at a boundary of said predetermined spaces and/or at a reference distance from at least one of said beacons.

3. Control system according to claim 1, **characterized in that** said geolocation information comprises data representative of the location of the tool.

4. Control system according to claim 3, **characterized in that** said data representative of the location of said tool belong to the group comprising:
- at least one distance between said portable tool and at least one beacon;
- coordinates of said portable tool in a fixed frame of reference, obtained via a trilateration calculation from distances between said portable tool and at least two beacons;
- polar coordinates of said portable tool with respect to the fixed frame of reference of a beacon;
- polar coordinates of at least two beacons with respect to the frame of reference of said tool.

5. Control system according to any of the preceding claims, **characterized in that** said boundaries of said predetermined spaces are defined by data representative of boundaries belonging to the group comprising:
- predetermined point coordinates corresponding to the corners of said boundaries;
- straight or curved theoretical junctions passing through said corners;
- at least one predetermined limit distance from at least one predetermined beacon.

6. Control system according to any of the preceding claims, **characterized in that** at least some of the signals exchanged between at least one of said beacons and said module carry:
- additional data; and/or
- orders to activate a predetermined operating strategy and/or to deactivate said tool and/or one of its accessories.

7. Control system according to any of the preceding claims, **characterized in that** said means (104) for receiving control information communicate with said control means (202) using one of the techniques belonging to the group comprising:
- SPI connections;
- I2C connections;
- USB connections;
- asynchronous serial links;
- digital inputs/outputs;
- radio means.

8. Control system according to any of the preceding claims, **characterized in that** the portable tool comprises means for defining said predetermined spaces, in a learning mode.

9. Control system according to claim 8, **characterized in that** said defining means comprise a learning actuator (205) making it possible to indicate the presence of said tool in a corner of said predetermined spaces and/or at a distance from at least one beacon.

10. Control method for controlling a portable tool (100) with a stand-alone power source via a control system according to any of Claims 1 to 10, said portable tool being equipped with control means (202) capable of controlling the behaviour of said tool, implementing at least one fixed geolocation beacon (110, 110', 110", 110‴) capable of communicating with said portable tool,
**characterized in that** it implements, in said portable tool, the following steps:
- receiving (E310) control information delivered by said at least one beacon, said control information comprising geolocation information and information making it possible to define activation of a production or screwing strategy;
- sending (E340) additional data such as traceability data, an identifier of an operator and/or an identifier of an employed accessory;
- determining (E350) whether said portable tool is present in or outside of said at least one predetermined space from said control information, this comprising:
- a step (E350a) of said receiving means computing or obtaining said data representative of the location of said tool from said received geolocation information;
- a step (E350b) of identifying the position of said tool in or outside of one of said predetermined spaces, depending on said data representative of the location of said tool;
- controlling (E360) the behaviour of said tool depending on whether said portable tool is present in or outside of said predetermined spaces, to permit operation of the portable tool and/or of one of its accessories, if the tool is found in at least one predetermined space, and to prevent operation of the tool and/or of one of its accessories, if the tool is not found in at least one predetermined space,
and permitting distinct types of operation according to said predetermined spaces, each type of operation corresponding to at least one predetermined production rule permitting a particular type of operation of the tool and/or of one of its accessories in compliance with a predetermined operating strategy, or permitted behaviour, associated with the predetermined space in question, the operating strategy comprising the screwing strategy and/or torque, taking into account the information received in said receiving step.

11. Control method according to claim 10, **characterized in that** it implements, in said tool, in a learning mode, a step (E300) of defining said predetermined working spaces.

12. Control method according to claim 11, **characterized in that** said defining step stores (E300a) data representative of boundaries of said predetermined working spaces and/or a limit distance from a predetermined beacon, via activation of a learning actuator (205).

13. Control method according to any of claims 10 to 12, **characterized in that** it comprises a step (E330) of receiving additional data from said tool and/or a step (E340) of transmitting additional data from said tool to a server (140), via signals exchanged with said beacons.
